# EUROPEAN PATENT APPLICATION

(11) **EP 1 752 871 A1**
(43) Date of publication of application: **14.02.2007**
(21) Application number: 05254526.6
(22) Date of filing: 20.07.2005
(51) Int. Cl.: G06F 7/53

(54) **Multiplier with speed optimised carry save adder tree**

(71) Applicant: STMicroelectronics (Research & Development) Limited, Marlow, Buckinghamshire SL7 1YL (GB)
(72) Inventor: Tariq, Kurd, Horfield, Bristol BS7 9QR (GB)
(74) Representative: Style, Kelda Camilla Karen

(57) **Abstract**

Combination circuitry for combining a plurality of multi-bit partial product terms, comprising at least one stage arranged to receive a first number of input bits, wherein at least one stage comprises at least one combiner comprising; a first logic device comprising; an input arranged to receive a first set of the first number of input bits and an output arranged to output a first combined result a second logic device comprising a first input arranged to receive a second set of the first number of input bits, a second input connected to receive the first combined result, a first output arranged to output a second combined result and a second output arranged to output a first combined bit group; and a third logic device comprising an input connected to receive the second combined result and an output arranged to output a second combined bit group, whereby the first combined bit group is available for a further stage of the combination circuitry before the second combined bit group.

## Description

### Field of the Invention

The present invention relates to combination circuitry particularly but not exclusively for multiplication circuitry.

### Background of the Invention

A typical binary multiplier for multiplying two binary numbers together comprises a series of processing stages such as an operand encoder, a partial product generator, a product term compressor, and a final addition stage.

The operand encoder encodes the first operand and reduces the number of terms representing the operand. Thus for example a 32 bit number may be reduced using a Booth code to two 17 terms or fewer.

The partial product generator multiplies the second operand by each of the encoded terms to produce a partial product term. Thus for a 32 bit multiplier where the first operand is encoded as 17 terms a total of 17 partial product terms are produced.

The product term compressor adds together (or as otherwise known compresses) the many partial products to form a pair of terms.

Finally the final term addition stage adds the pair of terms together to form the final product value.

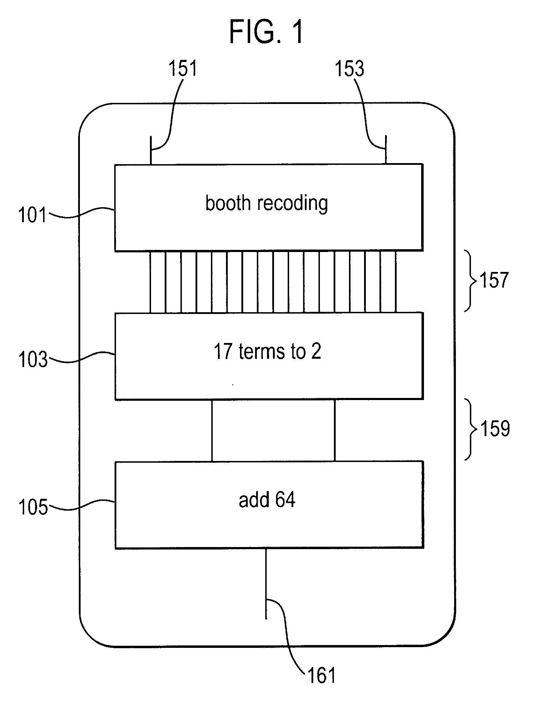

Figure 1 shows a typical 32 bit multiplier structure whereby a first and second operand 151 and 153 are input into a "Booth recoding" stage 101 which carries out the operand encoding stage and the partial product generation stage to generate the 17 partial product terms 157. The 17 partial product terms are fed into the compression circuitry, shown as "17 terms to 2" compressor 103 to output two 64 bit terms 159.

The 64 bit output terms 159 are passed to the final term addition stage, the "add64" block 105 to produce the final product value 161.

Compression circuitry, such as the "17 terms to 2" compressor 103 shown in Figure 1, have typically been designed to produce all of the possible partial product terms generated by the operand to form 2 terms within the smallest number of consecutive stages. Conventionally the compression circuitry is arranged in terms of columns of compression stages. Each compression stage column operates in combining term bits having the same binary weighting (i.e. 2ⁿ).

Conventional compressor stage columns are made up from full adders arranged in such a way that all of the input terms are required at essentially the same time, and the output terms are output at essentially the same time. These conventional stages comprising full adders lack flexibility in both input timing and output timing, requiring the timing of inputs to be strictly controlled and therefore producing strict demands on the circuitry generating the prior stages and also initially producing the partial product terms initially input to the compression circuit.

### Summary of the Invention

It is therefore the aim of the embodiments of the present invention to address or partially mitigate the problems discussed previously of reducing the severity of the timing requirements of the inputs and therefore lessening the timing constraints imposed on previous stages of the binary multiplier with respect to multiplication of binary numbers.

There is provided according to the invention combination circuitry for combining a plurality of multi-bit partial product terms, comprising at least one stage arranged to receive a first number of input bits, wherein at least one stage comprises: at least one combiner comprising: a first logic device comprising an input arranged to receive a first set of the first number of input bits and an output arranged to output a first combined result; a second logic device comprising a first input arranged to receive a second set of the first number of input bits, a second input connected to receive the first combined result, a first output arranged to output a second combined result and a second output arranged to output a first combined bit group; and a third logic device comprising an input connected to receive the second combined result and an output arranged to output a second combined bit group, whereby the first combined bit group is available for a further stage of the combination circuitry before the second combined bit group.

Embodiments of the invention described in the following have the advantage of lowering the timing constraints imposed on the use of the combined bit groups as the first combined bit group is produced by circuitry before the production of the second combined bit group. This allows the further combination circuit stages to take advantage of the early supply of combined bits to produce timing advantages for the data flow path.

The combination circuitry may comprise a further stage which comprises a further stage combiner arranged to receive and combine the first and second combined bit groups, the further stage combiner comprising: a further stage combiner first logic device comprising an input arranged to receive the first combined bit group and an output arranged to output a first combined result; and a further stage combiner second logic device comprising a first input arranged to receive the second combined bit group, a second input connected to receive the first combined result from the further stage combiner first logic device, and an output arranged to output a further combined bit group.

The further stage combiner second logic device further may comprise a second output arranged to output a second combined result, and the further stage combiner may further comprise a third logic device comprising an input connected to receive the second combined result of the further stage combiner second logic device and an output arranged to output a second further combined bit group, wherein the further combined bit group is available for an additional stage of the combination circuitry before the second further combined bit group.

Embodiments of the invention described hereafter have the further advantage whereby the arrangement of the stages benefit from the staggering of the inputs and outputs between stages to significantly reduce the critical path length for compression data.

The at least one stage combiner is possibly a 5:3 compression cell arranged to receive two bits of the first set of the first number of input bits, and three bits of the second set of the first number of input bits and output one bit of the first combined bit group and two bits of the second combined bit group.

The first logic device may further comprise a XOR gate, and the first logic device first combined result may comprise a first output bit from the XOR gate and a second output bit from one of the first set of input bits.

The second logic device may further comprise: a first XOR gate; a second XOR gate; and a multiplexer.

The third logic device may comprise an XOR gate and a multiplexer.

According to a second aspect of the present invention there is provided a method for combining a plurality of multi-bit partial product terms, comprising at least one stage arranged to receive a first number of input bits, comprising the steps of: receiving a first set of the first number of input bits; receiving a second set of the first number of input bits; and combining the received first and second sets of input bits to produce a first combined bit group and a second combined bit group; wherein the step of combining comprises the steps of: combining the first set of input bits prior to receiving the second set of input bits, and producing the first combined bit group prior to producing the second combined bit group.

The method may further comprise the steps of: receiving at a further stage the first and second combined bit groups; further combining the first and second combined bit groups to produce a further combined bit group, wherein the step of further combining may further comprise the steps of: further combining the first combined bit set prior to receiving the second combined bit group.

The step of further combining may further comprise the step of producing a first part of the further combined bit group prior to producing a second part of the further combined bit group.

### Description of Drawings

For a better understanding of the present invention and to show how the same may be carried into effect, reference will now be made by way of example only to the accompanying drawings in which:
Figure 1 shows a schematic view of a typical multiplier as known in the art;
Figure 2 shows a schematic view of a typical 10 bit compressor column comprising conventional full adders as used in Figure 1;
Figure 3 shows a schematic view of an improved 10 bit compressor column;
Figure 4 shows a schematic view of an improved full adder circuit as shown in Figure 3;
Figure 5 shows a schematic view of an improved 5:3 compression cell as shown in Figure 3;
Figure 6 shows a schematic view of further improved compressor column circuit comprising compression cells as shown in Figure 4 and full adders as shown in figure 5.

### Detailed Description of Embodiments of the Present Invention

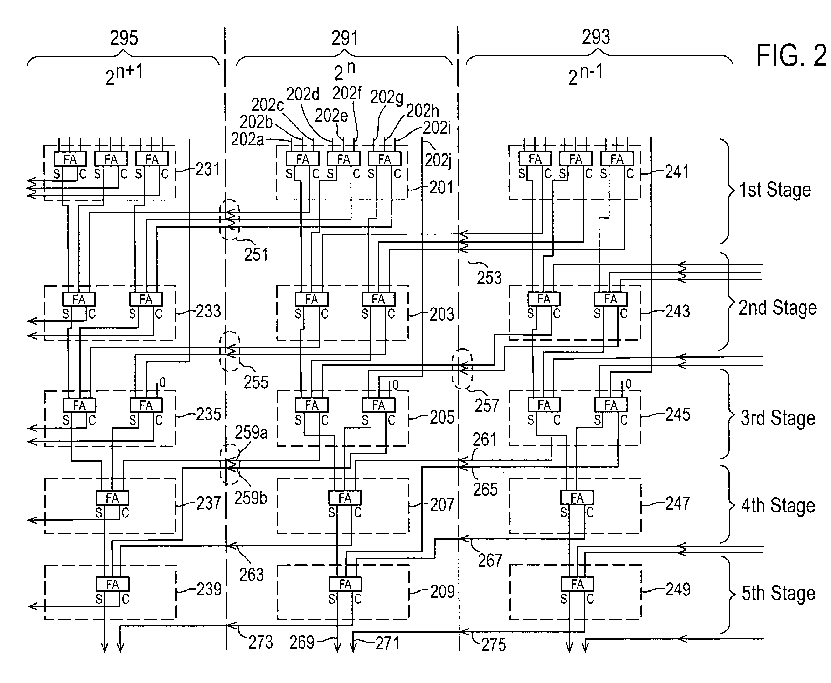

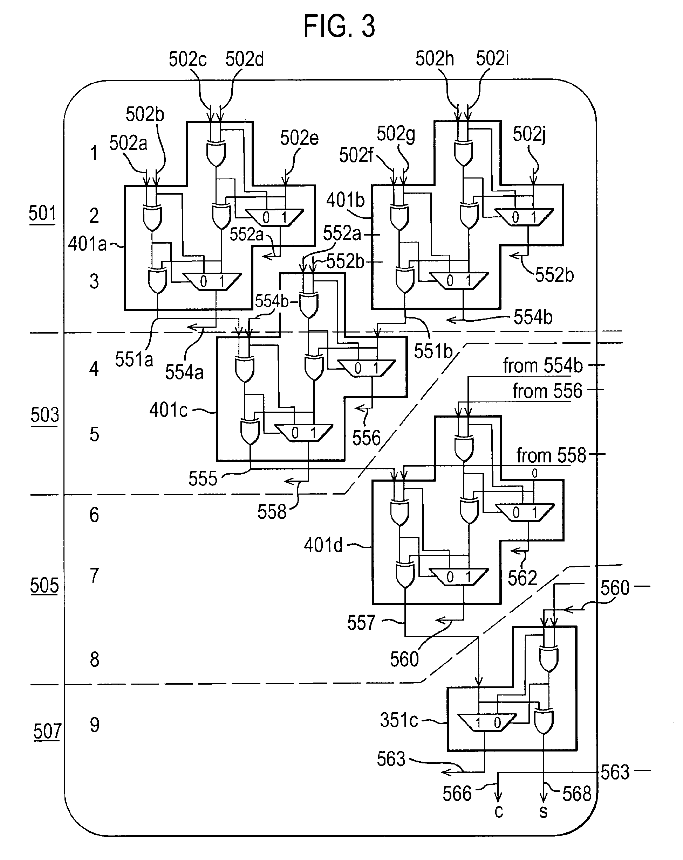

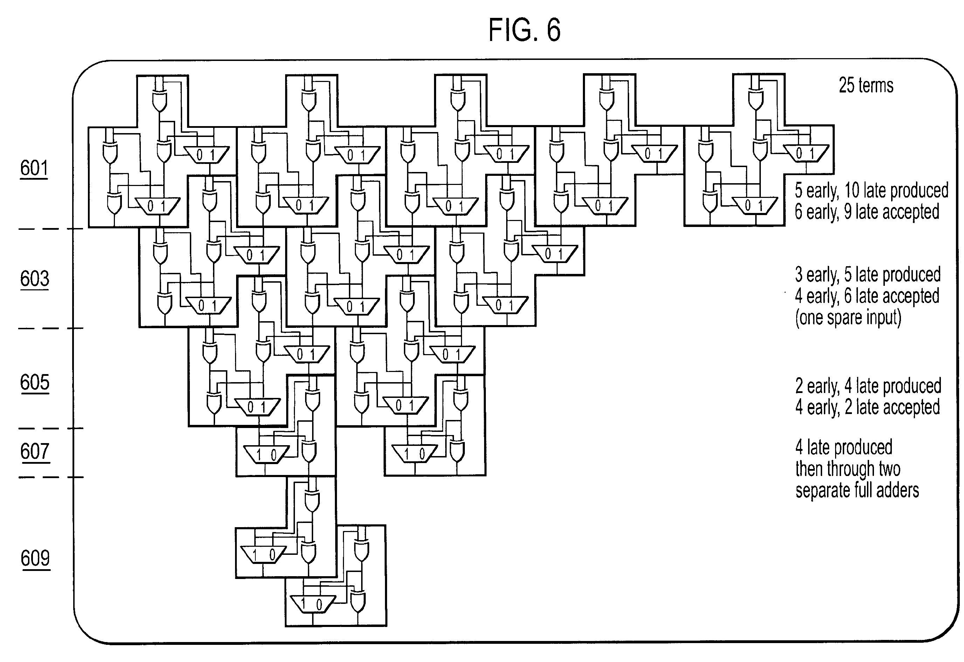

The encoding, partial product generation, and addition stages of the multiplication circuits as known in the art are not described in further detail. For the examples described with reference to Figures 2 and 3 a compression column circuit is shown which receives the output from a Booth encoding algorithm which generates 10 partial products. With reference to Figure 6 a compression column circuit receives an output from a Booth encoding algorithm which generates 25 partial products.

As appreciated by the person skilled in the art the examples described below with reference to 10 and 25 term compression circuits are examples only and compression circuits with columns capable of receiving any number of terms would be possible using the same techniques.

Furthermore although described as being a compression circuit for handling partial products from a booth encoding algorithm, the present invention can be applied to the compression or addition of terms irrespective of their origin.

As has been described previously and will be shown below, a product term compression circuit carries out the compression of the partial product terms in a series of compression stages. The compression circuit comprises a plurality of columns of compression cells, each column arranged in stages. Each compression stage of a column groups together bits of terms with the same weighting compresses them and passes them to the next compression stage.

The bits of each term are input to compression cells where the bits are compressed to a smaller number of bits. Each compression stage of a column outputs at least one sum output with the binary weighting the same as the current column (i.e. 2ⁿ) and at least one carry output with the binary weighting one greater than the current column (i.e. 2ⁿ⁺¹). The outputs, where there are more than two of them, are passed to the next compression stage. Most of the current compression stage 'sum' outputs are passed to the next compression stage within the same column (i.e. 2ⁿ) and most of the current compression stage column carry outputs are passed to the next compression stage of a column with a binary weighting one greater than the current column (i.e. 2ⁿ⁺¹). Also the compression stage within the same column is arranged to receive at least one of the current compression stage 'carry' outputs from a column with a binary weighting one less than the current column (i.e. 2ⁿ⁻¹).

Figure 2 shows three typical columns 291, 293, 295 of compression stages comprising full adder compression cells forming part of the compression circuit. Each column compresses 10 bits of the same weighting as described above. The central column 291 shown in figure 2 is the compression column for bits with a binary weighting of 2ⁿ. The left column 295 shown in figure 2 is the compression column for the bits with a binary weighting of 2ⁿ⁺¹. The right column 293 shown in figure 2 is the compression column for the bits with a binary weighting of 2ⁿ⁻¹. For simplicity only the interactions between the central 291 and left 295 and right 293 columns are described. However it would be appreciated that the left and right columns comprise similar structures and perform similar interactions between themselves and their adjacent columns.

The central column 291 shown comprises 5 compression stages. The central column first compression stage 201 receives 10 partial product terms 202a,...,202i and outputs 7 terms. The central column first compression stage 201 comprises 3 full adders each of which receive 3 partial product term bits. Each of the first compression stage adders output a sum bit which is passed to the central column second compression stage 203 and a carry bit 251 which is passed to the left column second compression stage 233 (i.e. the column with a higher binary weighting 2ⁿ⁺¹). Similarly the carry outputs 253 from the right column first compression stage 241 (i.e. from the column with a lower binary weighting 2ⁿ⁻¹) are passed to the central column second compression stage 203. In this example the number of carry output terms passing to the left column 295 (the adjacent column with a higher binary weighting) is equal to the number of carry outputs received from the right column 293 (the adjacent column with a lower binary weighting).

The central column second compression stage 203 comprises 2 full adders compressing 6 received term bits (3 bits from the sum outputs of the central column first stage full adders and 3 bits from the carry outputs of the right column first stage full adders 241 i.e. the adjacent lower binary weighting column) to 5 terms. Each of the central column second stage full adders output a sum bit which is passed to the central column third compression stage 205, and a carry bit 255 which is passed to the left column third compression stage 235 (i.e. to the adjacent column with a higher binary weighting).

The central column third compression stage 205 comprises 2 full adders compressing the 5 terms received (2 bits from the sum outputs from the central column second stage 203 full adders, 2 bits from the right column second stage 243 carry outputs 257 and 1 remaining partial product bit) to 4 terms. As there are only 5 bits for a possible 6 inputs, one input of one of the central column third compression stage two full adders is tied to ground to prevent any interference or noise propagation. Each of the central column third compression stage 205 full adders output a sum bit which is passed to the central column fourth compression stage 207. One of the central column third compression stage 205 full adders passes a carry bit 259a to the left column fourth compression stage 237, the other central column third compression stage 205 full adder passes a carry bit to the left column fifth compression stage 239.

The central column fourth compression stage 207 comprises a full adder compressing 3 received terms (2 bits from the sum outputs from the central column third stage 205, and one bit 261 from a carry output from the right column third stage to two terms). The central column fourth compression stage full adder outputs a sum bit which is passed to the central column fifth compression stage 209, and a carry bit 263 which is passed to the left column fifth compression stage 239.

The central column fifth compression stage 209 comprises a full adder compressing 3 received terms (1 bit from the central column fourth stage 207 full adder, 1 bit from the remaining unused right column third compression stage carry output 265 and 1 bit from the right column fourth compression stage carry output 267) to 2 terms. The central column fifth stage full adder outputs a sum bit which is passed as the central column first output term 269, and a carry bit 273 which is passed to the left column to form one of the two output terms. The central column second output term 271 is the received carry output 275 from the right column fifth compression stage.

Data passing through a circuit as shown in figure 2 has to pass through 5 compression stages (the path taken by the input terms 202a to 202i). This creates a critical path delay through the compression circuit of 5 full adders. As the critical path through a known full adder circuit is two XOR gates, the total critical path is 10 logic gates. Furthermore as all except the input 202j is required at essentially the same time strict timing control of the circuitry driving the inputs is required.

With reference to Figure 3 an improved 10 bit compression column is shown. The compression column forms an improved compression circuit. As shown and described earlier a compression column has adjacent compression columns (not shown in figure 3 for clarity). The principle of the 'carry' inputs and outputs is the same for the improved circuit as for the traditional circuit. 'Carry' outputs from each of the shown compression column compression cells are passed to the compression column which compresses bits with a binary weighting higher than the shown compression column. Furthermore the shown compression column receives 'carry' outputs from the adjacent compression column which compresses bits with a binary weighting lower than the shown compression column. Although the adjacent columns are not shown the interconnections between the columns are shown in figure 3.

The improved compression column comprises 4 stages. In the first compression stage 501 the 10 partial product terms are compressed to 6 terms. The first compression stage 201 comprises two 5:3 compression cells 401a, 401b, each of which receive 5 partial product term bits.

As will be described in more detail below each 5:3 compression cell has 2 'early' inputs, and 3 'late' inputs. The 'late' inputs are not required until after the 'early' inputs in order for the 5:3 compressor circuit to perform its task of compressing or adding the inputs to produce the output values. The output values are also produced at different times with the 'early' outputs produced before the 'late' outputs. The 5:3 compression cell produces a 'late' sum output having the same binary weighting as the inputs, an 'early' carry output having a binary weighting one greater than the inputs and a 'late' carry output also having a binary weighting one greater than the inputs.

For the example described below the partial product bits 502a, 502b, 502e, 502f, 502g, 502j are connected to the 'late' inputs of the two 5:3 compression cells and the remainder of the bits 502d, 502e, 502h, 502i are connected to the 'early' inputs.

The first compression stage 5:3 compression cells 401a, 401b output two sum bits 551a, 551b which are passed to the second compression stage 503, two 'early' carry bits 552a, 552b and two 'late' carry bits 554a, 554b, one of which 554a is passed to the higher binary weighting column (2ⁿ⁺¹) second compression stage (not shown), and the other 554b which is passed to the higher binary weighting column third compression stage (not shown).

The second compression stage 503 comprises a single 5:3 compression cell 401c, compressing 5 received term bits (the first compression stage compression cell two sum bits 551a, 551b, the two lower binary weighting compression column first compression stage 'early' carry bits, and one lower binary weighting compression column first compression stage 'late' carry bit) to three term bits. The two sum bits 551a, 551b and the 'late' carry bit are connected to the three 'late' inputs and the two 'early' carry bits are connected to the two 'early' inputs.

The second stage 5:3 compression cell 501c outputs a sum bit 555 which is passed to the third compression stage 505, an 'early' 556 and a 'late' 558 carry bit which are both passed to the higher binary weighting column third compression stage (not shown).

The third compression stage 505 comprises a single 5:3 compression cell 401d, compressing 4 received term bits (the second compression stage sum bit 555, the remaining lower binary weighting compression column first compression stage 'late' carry bit, the lower binary weighting compression column second compression stage 'early' and 'late' carry bits) to 3 term bits. The second stage sum bit 555, the lower binary weighting compression column second compression stage 'late' carry bit, and a grounded signal are input as the three 'late' inputs. The 'early' inputs are formed from a bit from the remaining inputs, the lower binary weighting compression column first compression stage 'late' carry bit, and the lower binary weighting compression column second compression stage 'early' carry bit.

The third stage 5:3 compression cell 401d outputs a sum bit 557 which is passed to the fourth compression stage 505, a 'early' 562 and a 'late' 560 carry bit to the higher binary weighting compression column fourth compression stage (not shown).

The fourth compression stage 507 comprises an improved full adder 351c. The implementation of the improved full adder will be described in more detail below. The improved full adder 351c receives two 'early' inputs which are the lower binary weighting compression column third compression stage 'early' and 'late' carry outputs (not shown). The improved full adder 351c receives a 'late' input from the third compression stage sum output 557.

The carry output 563 from the improved full adder 351c is passed to a higher binary weighting compression column (not shown) to form a first output bit term. The first output bit 556 for the shown column is received from the lower binary weighting compression column fourth compression stage carry output. The fourth compression stage improved full adder sum output 568 forms the second output bit.

As can be seen from above and with reference to figure 3, the interconnections between stages are kept, as much as possible, so that an 'early' output from one stage is connected to an 'early' output from the following stage and similarly a 'late' output is connected to a 'late' input. By connecting stages together in this manner the advantage in producing early signals and only requiring later inputs can be fully exploited to produce a reduction in data timing delay, which can also be seen in figure 3 with respect to the partial tessellation of the compression cells.

The improved compression column shown features a critical delay path of only 4 stages, which as shown in figure 3 is a total delay of only 9 logic gates. Furthermore the minimum logic path is only 7 gates long. This is a clear advantage over the conventional known circuit shown in figure 2, which has a critical delay path of 10 gates, i.e. 2 gates per full adder and 5 full adder stages. The shortest data path of the conventional structure is also slower than the improved column shown in figure 3, with the conventional structure shortest path having a minimum of 8 gates delay.

A further advantage with the improved structure as shown in Figure 3 is that 6 of the 10 input bits are only required after the first 4 'early' inputs. This allows the multiplier circuit designer using the improved compression columns in a compression circuit as part of a multiplier to design the booth encoding circuitry knowing that over half of the input bits are not initially required and can be supplied at a later time.

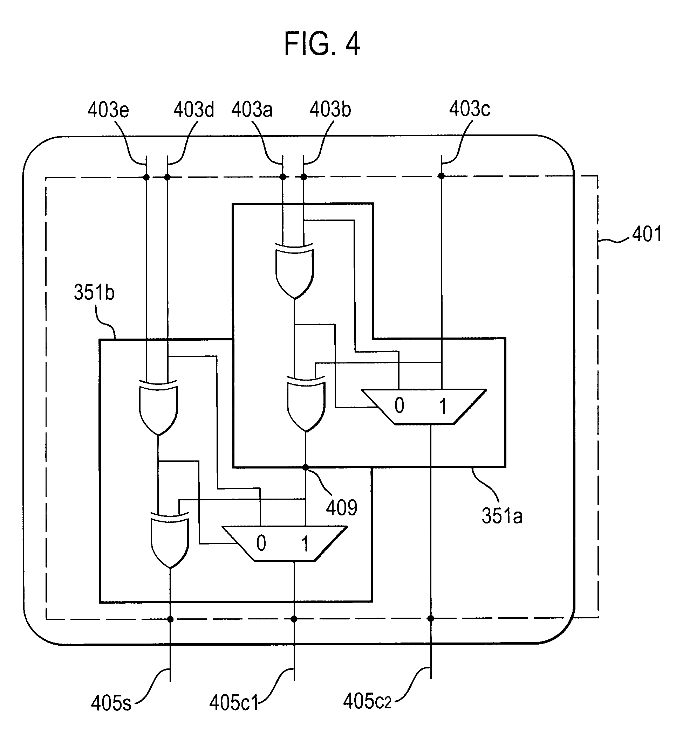

With reference to Figure 4 a schematic view of an improved full adder 351 as used in embodiments of the present invention is described further. The full adder 351 comprises three inputs 353a, 353b, 353c and two outputs 355s (the sum output) and 355c (the carry output). The inputs 353a and 353b are input to a first XOR gate 301 the output of the first XOR gate 301 is input along with the third input c to the second XOR gate 303. The second XOR gate 303 output is connected to the sum output (355s) of the full adder 351. The first input 353a and the third input 353c are connected to the two inputs of a 2 bit multiplexer 305. The selection input of the multiplexer 305 is connected to the output of the first XOR gate 301. The output of the 2 bit multiplexer is arranged so that if the inputs 353a and 353b are the same then the value of 353a is selected however if the inputs 353a and 353b are different then the input of 353c is selected to be output. The 2 bit multiplexer output is connected to the carry output of the adder 351.

Furthermore as shown schematically on the right hand side the inputs 353a and 353b are 'early' inputs and the input 353c is a 'late' input. In other words the correct result is produced even when the input 353c is received after the inputs 353a and 353b. In the example shown in figure 4 the input 353c can be received up to 1 gate period later than inputs 353a and 353b without any delay in producing the correct result.

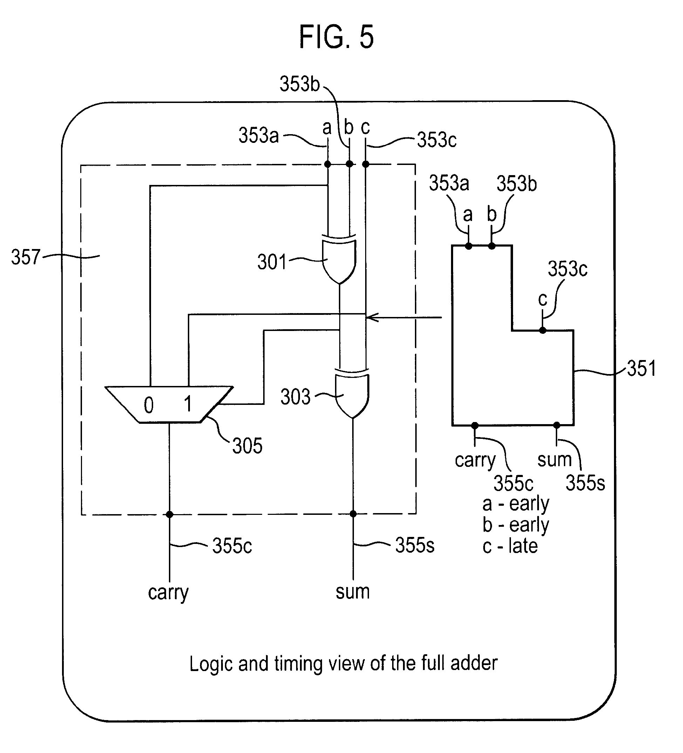

With reference to Figure 5 a 5:3 compression cell 401 as used within the improved compression circuit column is shown. The 5:3 compression cell 401, which is logically identical to a conventional 4:2 compression cell, comprises 2 improved full adders 351a, 351b as described previously with regard to Figure 4. The 5:3 compression cell 401 comprises 5 inputs 403a, 403b, 403c, 403d, 403e and 3 outputs 405s, 405c1, 405c2. The two improved full adders 351a and 351b are arranged such that the 5:3 compression cell input bits 403a, 403b are connected to the 2 'early' inputs of the first improved full adder 351a, the 5:3 compression cell input 403c is connected to the 'late' input of the first improved full adder 351a, and the 5:3 compression cell inputs 403d and 403e are connected to the 'early' inputs of the second improved full adder 351b.

The carry output of the first improved full adder 351a forms the second carry output 405c2 of the 5:3 compression cell 401. The sum output of the first improved full adder 351a is connected to the 'late' input of the second improved full adder 351b. The sum and carry outputs of the second improved full adder 351b form the 'late' sum 405s and the 'late' carry 405c1 outputs of the 5:3 compression cell 401.

This 5:3 compression cell 401 has a first advantage over a conventional 5:3 or 4:2 compression cell wherein two of five inputs are required before the remaining three of the inputs. This as shown above enables an optimisation of the compression circuit.

Furthermore one of the carry outputs 405c2 is produced "early" when compared to the other two outputs. Thus this 'early' production also allows an optimisation of the data flow through a compression circuit as shown above.

Furthermore the path from 403a, 403b to 405c1, the critical path, is through two improved full adders has a delay of three logic gates. A traditional structure 4:2 or 5:3 compression cell comprising of two full adders typically passes through two complete full adders with a critical delay path of 4 gates.

With regards to Figure 6 a further example of the improved compression column structure is shown. The example shown in Figure 6 compresses 25 term bits to produce a 2 term bit output. Once again the principles of adjacent columns and the passing and receiving of the 'carry' outputs between columns are the same as the previous examples described earlier. To further simplify the circuit in this example the adjacent columns and the interconnects between the columns defining the explicit passing of carry terms bits will not be described in further detail.

The column comprises five stages of compression. The first stage 601 comprises five 5:3 compression cells as described previously. The first stage 601 compresses 25 term bits to produce 5 early term bits and 10 late term bits.

The second stage 603 comprises three 5:3 compression cells. The second stage receives 5 'early' inputs with the remaining unused 'early' input tied to ground and 9 'late' inputs and compresses these to produce 3 early outputs and 6 late outputs.

The third stage 605 comprises two 5:3 compression cells. The third stage 605 accepts 3 'early' inputs and 6 'late' inputs from the second stage 603 with the final 'early' input from the unused 'late' output from the first stage 601.. The third stage produces 2 'early' outputs and 4 'late' outputs.

The fourth stage 607 comprises 2 improved full adders and receives 4 'early' inputs and 2 'late' inputs to produce 4 outputs.

The fifth stage 609 comprises two separate improved full adders. The fifth stage 609 first improved full adder receives three inputs from the fourth stage 607. The fifth stage second improved full adder receives the sum output of the first full adder, the carry input from the adjacent lower weighting column, and the remaining carry output from an adjacent lower weighting fourth stage improved full adder (not shown).

The fifth stage 609 second improved full adder produces the sum and carry outputs following weighting rearrangement of the outputs.

As can be seen in Figure 6 the addition of 25 terms has only a maximum logic delay of 11 gates and a minimum of 10. The conventional compression column structure required data to be passed through a maximum of 7 full adders (with a maximum logic delay of 14 gates and a minimum of 13 gates). It can therefore be seen that the improvement in terms of critical path delay is apparent for large numbers of terms, and also appears to increase as the number of input terms increases.

## Claims

1. Combination circuitry for combining a plurality of multi-bit partial product terms, comprising at least one stage arranged to receive a first number of input bits, wherein at least one stage comprises:
at least one combiner comprising:
a first logic device comprising an input arranged to receive a first set of the first number of input bits (403a, 403b) and an output arranged to output a first combined result;
a second logic device comprising a first input arranged to receive a second set of the first number of input bits (403c, 403d, 403e), a second input connected to receive the first combined result, a first output arranged to output a second combined result and a second output arranged to output a first combined bit group (405c2); and
a third logic device comprising an input connected to receive the second combined result and an output arranged to output a second combined bit group (405s, 405c1), whereby the first combined bit group is available for a further stage of the combination circuitry before the second combined bit group.

2. Combination circuitry as claimed in claim 1, comprising a further stage which comprises a further stage combiner arranged to receive and combine the first and second combined bit groups, the further stage combiner comprising:
a further stage combiner first logic device comprising an input arranged to receive the first combined bit group and an output arranged to output a first combined result; and
a further stage combiner second logic device comprising a first input arranged to receive the second combined bit group, a second input connected to receive the first combined result from the further stage combiner first logic device, and an output arranged to output a further combined bit group.

3. Combination circuitry as claimed in claim 2, wherein the further stage combiner second logic device further comprises a second output arranged to output a second combined result, and the further stage combiner further comprises a third logic device comprising an input connected to receive the second combined result of the further stage combiner second logic device and an output arranged to output a second further combined bit group, wherein the further combined bit group is available for an additional stage of the combination circuitry before the second further combined bit group.

4. Combination circuitry as claimed in claims 1 to 3, wherein the at least one stage combiner is a 5:3 compression cell (401) arranged to receive two bits of the first set of the first number of input bits, and three bits of the second set of the first number of input bits and output one bit of the first combined bit group and two bits of the second combined bit group.

5. Combination circuitry as claimed in claim 4, wherein the first logic device further comprises a XOR gate, and the first logic device first combined result comprises a first output bit from the XOR gate and a second output bit from one of the first set of input bits.

6. Combination circuitry as claimed in claims 4 and 5, wherein the second logic device further comprises:
a first XOR gate;
a second XOR gate; and
a multiplexer.

7. Combination circuitry as claimed in claims 4 to 6 wherein the third logic device comprises an XOR gate and a multiplexer.

8. A method for combining a plurality of multi-bit partial product terms, comprising at least one stage arranged to receive a first number of input bits, comprising the steps of:
receiving a first set of the first number of input bits (403a, 403b);
receiving a second set of the first number of input bits (403c, 403d, 403e); and
combining the received first and second sets of input bits (403a, 403b, 403c, 403d, 403e) to produce a first combined bit group (405c2) and a second combined bit group (405s, 405c1); wherein the step of combining comprises the steps of:
combining the first set of input bits prior to receiving the second set of input bits, and
producing the first combined bit group prior to producing the second combined bit group.

9. The method for combining as claimed in claim 8 further comprising the steps of:
receiving at a further stage the first and second combined bit groups;
further combining the first and second combined bit groups to produce a further combined bit group, wherein the step of further combining further comprises the steps of:
further combining the first combined bit set prior to receiving the second combined bit group.

10. The method for combining as claimed in claim 9, wherein the step of further combining further comprises the step of producing a first part of the further combined bit group prior to producing a second part of the further combined bit group.

11. A combiner for combining a first number (N) of input bits and outputting a second number (M) of output bits comprising:
a first logic device comprising an input arranged to receive a first set of the first number of input bits (403a, 403b) and an output arranged to output a first combined result;
a second logic device comprising a first input arranged to receive a second set of the first number of input bits (403c, 403d, 403e), a second input connected to receive the first combined result, a first output arranged to output a second combined result and a second output arranged to output a first set of the second number of output bits (405c2); and
a third logic device comprising an input connected to receive the second combined result and an output arranged to output a second set of the second number of output bits combined bit group (405s, 405c1), whereby the first set of the second number of output bits are available before the second set of the second number of the output bits.

12. The combiner as claimed in claim 11 wherein the first number of input bits is 5 and the second number of output bits is 3.
